# EUROPEAN PATENT APPLICATION

(11) **EP 4 202 353 A1**
(43) Date of publication of application: **28.06.2023**
(21) Application number: 21217714.1
(22) Date of filing: 24.12.2021
(51) Int. Cl.: G01B 5/00, G01B 21/26

(54) **ROLLING MASTER WITH KINGPIN AXIS AND STEERING TO CALIBRATE WHEEL ALIGNMENT STATIONS**

(71) Applicant: Volvo Car Corporation, 40531 Göteborg (SE)
(72) Inventor: Aronsson, Carola, 433 49 Partille (SE); Brandin, Tobias, 442 95 Halta (SE)
(74) Representative: Nederlandsch Octrooibureau

(57) **Abstract**

A rolling master fixture (100) for calibration of a wheel alignment station and/or measurement devices thereof is provided. The rolling master fixture comprises a support frame (102), two rear wheels (1041) mounted to the support frame, two front wheels (1042) mounted to the support frame through a front wheel mounting arrangement (114), and a steering arrangement (108) for steering the front wheels. The rolling master fixture enables calibration of king pin angle and caster angle, through the turnably mounted front wheels.

## Description

### Technical Field

The disclosure relates to a rolling master fixture enabling calibration of measurement equipment measuring toe angle, camber angle, caster angle and king pin angle. Such equipment can typically be found in wheel alignment stations. The disclosure also relates to a method of calibrating a wheel alignment station.

### Background Art

Attributes connected to driving and handling of a vehicle are connected to the behavior of the wheel suspension. Therefore, it is important to verify wheel alignment parameters of a vehicle, such as toe angle, camber angle, king pin angle and caster angle, e.g. before the vehicle leaves the factory. These parameters can be measured in wheel alignment stations. In order to ensure the accuracy of those measurements, calibration of the wheel alignment station, or the measurement equipment thereof, is important. Such calibration is usually performed by measurement on master fixtures having well defined angles. With today's master fixtures, it is however not possible to have calibration on two of the wheel angles, namely the caster angle and the king pin angle. Currently, caster angle and king pin angle are regularly measured for vehicles, but the accuracy of those measurements are difficult to estimate, since it is currently not possible to calibrate the equipment of the wheel alignment measurement stations to a nominal value. At present, only the toe angle and camber angle measurements are calibrated, and the accuracy of the king pin angle and caster angle measurements are assumed to be accurate by means of the calibration of the other parameters.

Conventional rolling master fixtures are made of a rigid steel frame, and provided with four wheels, which cannot be turned or steered. This enables measurement of toe angle and camber angle, and subsequent calibration of the wheel alignment measurement station in respect of measurement of these angles. However, caster angle and king pin angle, which are also important parameter for driving comfort and safety, cannot be measured with the conventional master fixtures. Consequently, measurements of these angles cannot be calibrated using conventional rolling master fixtures.

Attempts have been made to solve the problem of calibration of king pin angle and caster angle measurements in wheel alignment station by including conventional wheel suspensions to the conventional rolling master fixture. However, such solutions has been seen to experience an unacceptable amount of play in the connection points of the wheel suspension. Also, the measurement results of the wheel alignment stations to be calibrated were negatively influenced from variations in the vertical position of the fixture. Those attempts have therefore not resulted in a rolling master fixture enabling accurate calibration of caster and king pin angle.

It is therefore an object of the present disclosure to provide a rolling master fixture enabling calibration of caster angle and king pin angle measurements in wheel alignment stations.

### Summary

The present disclosure relates to a rolling master fixture for calibration of a wheel alignment station and/or measurement devices thereof, the rolling master fixture comprising:
- a support frame;
- two rear wheels mounted to the support frame;
- two front wheels mounted to the support frame through a front wheel mounting arrangement; and
- a steering arrangement for steering the front wheels.

The present disclosure provides a rolling master fixture with a steering wheel, whereby it is possible to turn the front wheels. This provides the possibility of measuring additional parameters, including caster and king pin angle, on the rolling master fixture. These parameters cannot be measured using the conventional rolling master fixtures.

The front wheel mounting arrangement may comprise a physical king pin axis. That is, the rolling master fixture can be provided with a physical element, in particular a cylindrical element, positioned and oriented along the king pin axis such as to provide a physical representation thereof. This facilitates providing well defined reference values for the king pin angle and the caster angle.

The front wheel mounting arrangement may advantageously be configured for positioning a measurement probe at each end of the physical king pin axis for measuring one or more parameters related to the inclination of the physical king pin axis. The physical king pin axis may be provided with openings at each end, for mounting of markers to be used in measurements, in particular coordinate measurement machine, CMM, markers, to the physical king pin axis.

The front wheel mounting arrangement can comprise a wheel mounting frame, which is connected to the steering arrangement. The physical king pin axis is arranged at least partly in the wheel mounting frame. The wheel mounting frame may further be provided with a bearing for rotatably mounting the front wheel.

The steering arrangement can comprise a steering column and a motor connected to the steering column for controlling steering of the front wheels.

The support frame is preferably at least partly made of aluminum or of a material comprising aluminum. By the use of aluminum, and specific design of the frame sections, a support frame having a roll behavior, in particular a rear axle roll resistance, similar to that of a real vehicle can be realized.

The present disclosure provides a rolling master fixture having a behavior more closely resembling the behavior, e.g. the stiffness, of the chassis a real vehicle. To this end, the rolling master fixture comprises an aluminum support frame, which provides a structure having a stiffness, or flexibility, closely resembling the chassis of a car body and a rear axle. The flexibility of the support frame has been designed to be softer in twist around the vehicle longitudinal axis than a normal vehicle body, since the rear suspension is softer than the body. That is, with the herein described rolling master fixture, wheel alignment can be measured which more accurately resembles a real situation.

**A** control panel may be provided for controlling operation of the rolling master fixture and/or one or more components thereof, the control panel being in wired or wireless communication with the rolling master fixture and/or the one or more components thereof.

The disclosure further relates to a method for calibrating a wheel alignment station and/or measurement devices thereof, the method comprising:
- arranging the rolling master fixture as described above in the wheel alignment station;
- determining wheel alignment parameters by measurements using the wheel alignment station, the wheel alignment parameters including king pin angle and caster angle;
- calibrating the wheel alignment station and/or the measurement devices thereof based on comparison of values of the caster angle and king pin angle as determined from the measurements by the wheel alignment station with calibration values of caster angle and king pin angle determined through probe measurements on the physical king pin axis.

The calibration values of the caster angle and the king pin angle are advantageously obtained through CMM measurements.

### Brief description of the Drawings

A rolling master fixture according to the disclosure will, by way of non-limiting example, be described in detail with reference to the accompanying drawings.

In the drawings:
Fig. 1 shows a rolling master fixture according to the prior art, arranged in a wheel alignment station;
Fig. 2 shows the definitions of king pin axis, king pin angle, and caster angle;
Fig. 3 shows the rolling master fixture of the present disclosure;
Fig. 4 shows a detail of the front left of the rolling master fixture;
Fig. 5 shows a detail of the front wheel mounting arrangement of Fig. 4, as seen from the interior;
Fig. 6 shows the front wheel mounting arrangement of Fig. 5, as seen from the exterior;
and
Fig. 7 shows a schematic illustration of the steering arrangement and its connecton to the front wheel mounting arrangement.

### Detailed Description

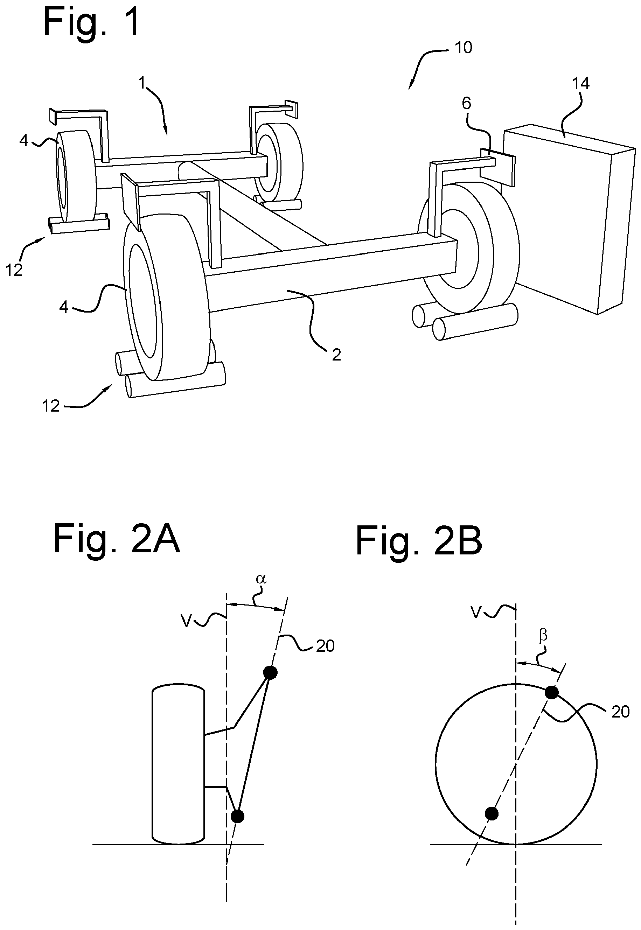

Fig. 1 schematically shows a conventional rolling master fixture 1 arranged in a wheel alignment station 10. The conventional rolling master fixture 1 comprises a support frame 2, or chassis, made of steel, which provides a very rigid structure. Four wheels 4 are mounted to the support frame 2, such as to be rotatable around their own axis. In the conventional rolling master fixture 1, all four wheels, i.e., both the front and the rear wheels, are mounted in a fixed direction. It is not possible to turn, or steer, any of the wheels. The rolling master fixture is further provided with a screen 6 located above each wheel, which is provided for measurement purposes. The screen 6 resembles the wheel arch of a vehicle body.

**The** wheel alignment station 10 illustrated in Fig. 1 is shown as a non-limiting example of a known wheel alignment station. It will be clear to the skilled person that the rolling master fixture can be used also in other types of wheel alignment stations for calibration thereof.

In the wheel alignment station 10, the rolling master fixture is positioned with each of its wheels on a pair of rollers 12. The wheels of the fixture can then roll, or rotate, on the rollers, e.g. such as to simulate a driving situation of a vehicle. A measurement unit 14 is arranged at each wheel, for measuring wheel alignment parameters. Such measurement unit 14 typically projects laser light onto the wheel 4 and the screen 6, and measures the resulting pattern of light, and/or the reflection of the projected laser light. From the resulting pattern of light projected onto the wheel and the screen, or the reflection thereof, the wheel alignment parameters, in particular wheel angles including toe angle and camber angle, can be determined. This determination is generally performed by a processing unit (not show), in a known manner. The toe angle and camber angle determined from the measurements on the rolling master fixture are compared to the expected values thereof, and the wheel alignment station, and/or the measurement units thereof, are calibrated based on this comparison.

While the conventional rolling master fixture 1 enables calibration of the toe angle and the camber angle, as described above it does not enable measurement, and hence not calibration, of king pin angle and caster angle.

Fig. 2A and 2B provides a definition of the king pin axis, the king pin angle, and the caster angle, as used throughout the present disclosure. The king pin axis 20 is the axis around which the front wheels of a vehicle rotates when turned during steering of the vehicle. In a real vehicle, the king pin axis 20 is a virtual axis, typically defined by the joints of the wheel suspension. The king pin angle α, also known as king pin inclination, KPI, represents the inclination of the king pin axis with respect to the vertical direction, when seen from the rear. The caster angle β is the angle, or inclination, of the king pin axis with respect to the vertical direction, v, when seen from the side of the vehicle.

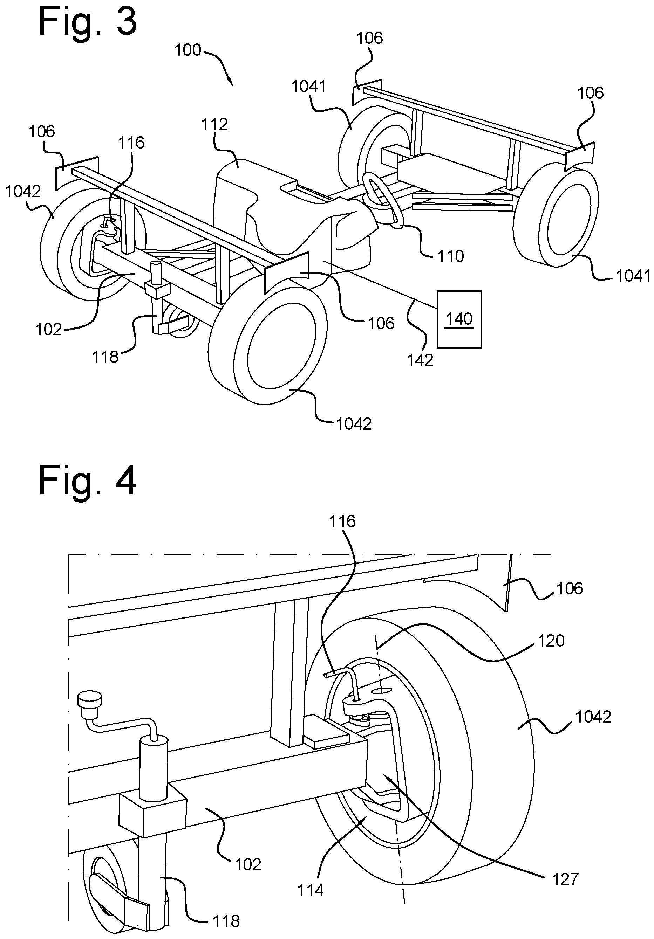

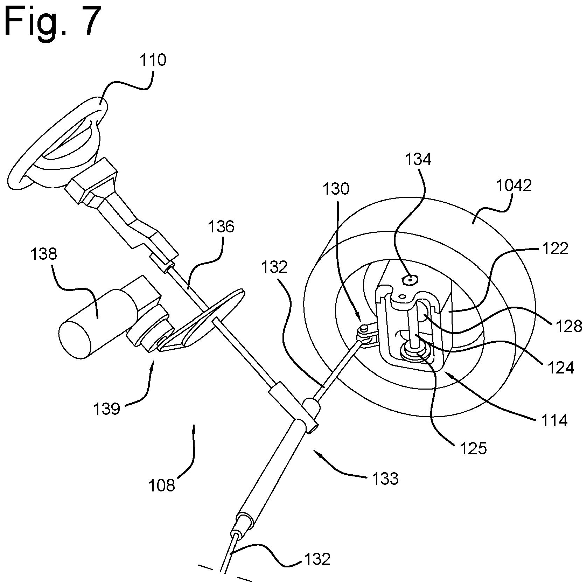

Fig. 3 shows a schematic view of a rolling master fixture 100, for calibration of a wheel alignment station and/or measurement devices thereof, according to the present disclosure. The rolling master fixture 100 comprises a support frame 102, to which a pair of rear wheels 1041 and a pair of front wheels 1042 are mounted. All wheels are mounted to be rotatable around their own axis, such as to be able to drive the fixture on rollers or belt of a wheel alignment station. The rear wheels 1041 are mounted with fixed orientation, i.e., are not steerable. The front wheels 1042, however, are steerable mounted. Steering of the front wheels is controlled by a steering arrangement 108 (see Fig. 7) comprising a steering wheel 110. The steering wheel 110 is connected to a steering column (not shown in Fig. 3), which in turn is connected to the front wheels such as to allow turning, or steering, of the front wheels. As described further herein below with reference to Fig. 7, a steering motor is connected to the steering column. This enables simulating turning of the fixture during a calibration procedure calibrating the wheel alignment station, analogous to turning of a vehicle. The fixture 100 is further provided with a screen 106 located above each wheel, similar to the screen 6 described with reference to the rolling master fixture 1 illustrated in Fig. 1.

The support frame 102 is made of aluminum, or a material comprising aluminum. Thereby, the rolling master fixture 100 exhibits properties, in particular in respect of rigidity, more closely resembling a real vehicle, than the conventional rolling master fixture 1.

A control panel 140 is provided for controlling operation of the rolling master fixture 100 from a distance. In particular, the steering motor 138, in Fig. 3 located under the cap 112, for turning the front wheels, can be controlled via the control panel 140. In some embodiments, also other functions of the rolling master fixture 100 can be controlled through the control panel 140. The control panel 140 is preferably connected to the rolling master fixture, in particular the steering motor 138, through a wired connection, such as an electrical cable 142. Alternatively, the control panel 140 and the fixture 100 may be configured for wireless connection.

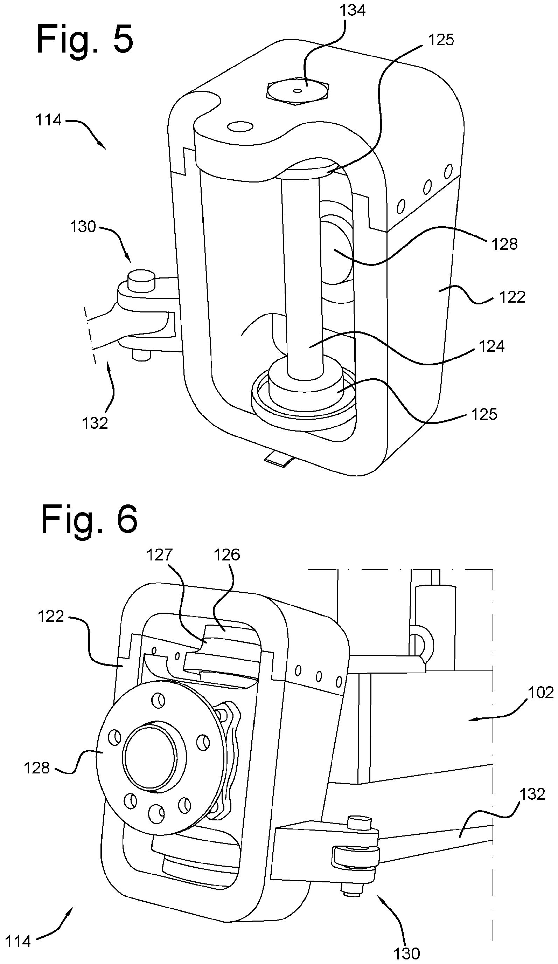

Fig. 4 shows the front left part of the rolling master fixture 100. The right front part of the rolling master fixture is of similar construction, albeit mirrored, as will be understood by the person skilled in the art. The front wheel 1042 is mounted to the support frame 102 by a front wheel mounting arrangement 114, in a manner such that the front wheel 1042 can be turned around an axis 120, the king pin axis. The front wheel mounting arrangement 114 will be explained in more detail herein below with respect to Figs. 5 and 6.

The front wheel 1042 can be prevented, or blocked, from turning by a locking pin 116, e.g. during transportation of the rolling master fixture 100.

The rolling master fixture 100 can further be provided with a transportation wheel arrangement 118, according to a construction as conventionally known for trailers. During transportation or positioning of the rolling master fixture 100 onto the wheel alignment station 10 or into a storage location, the front portion of the rolling master fixture can be raised by adjustment of the transportation wheel arrangement 118, such that the front wheels 1042 do not make contact with the ground. Thereby, movement and positioning of the rolling master fixture may be facilitated.

Fig. 5 shows a schematic illustration of the front wheel mounting arrangement 114, as seen from the interior side. The front wheel mounting arrangement comprises a wheel mounting frame 122. Within this frame 122, an element, herein in the form of a solid cylindrical element, herein referred to as a physical king pin axis, 124 is provided, which is substantially aligned with the king pin axis such as to provide a physical representation of the king pin axis 120. The physical king pin axis 124 is fixed with respect to the frame 122. In the embodiment illustrated in Fig. 5, the wheel mounting frame 122 is pressed on to the physical king pin axis 124. The physical king pin axis 124 is further connected to two bearings 125, on inner rings thereof. These two bearings 125 are connected with their outer rings to a cylindrical element 127, which can be seen in Fig. 4 and 6.

Fig. 6 shows a schematic illustration of the front wheel mounting arrangement 114, shown in Fig. 5, as seen from the external side of the rolling master fixture. The cylindrical element 127, surrounding the part of the physical king pin axis which extends through the wheel mounting frame 122, is rigidly connected to the support frame 102. As mentioned above, the cylindrical element 127 fits to the bearings 125 on their outer rings. With their inner rings, bearings 125 fit to the physical king pin axis 124.

Thereby, the physical king pin axis 124 and the wheel mounting frame 122 can rotate with respect to the support frame 102. Thereby, the front wheels 1042 can rotate around the king pin axis. This arrangement hence enables the front wheels of the rolling master fixture to be turned, or steered, while providing stiffness in the vertical direction, such as to prevent, or at least minimize, variations in the height position of the rolling master fixture during measurements in a wheel alignment station.

Further, a bearing cover 126, illustrated in Fig. 6, is arranged surrounding the internal bearings 125, such as to protect the bearing 125 from environmental influences. The wheel mounting frame 122 is further provided with a wheel mounting bearing 128 for rotatably mounting the front wheel 1042 to be rotatable around its own axis, enabling driving of the front wheel.

**The** wheel mounting frame 122 is connected to the steering arrangement 108 through gap-free joint 130 and linkage 132, the linkage 132 in turn being connected to the steering gear 133 and the steering column 136. In conventional terms, the joint 130 is a ball joint positioned on the outer tie rod, herein represented by the linkage 132. According to the present disclosure, the ball joint 130 is selected such as to be substantially gap-free, or to, as far as possible, minimize any gaps and plays as far as possible. To this end, advantageously a ball joint as often used in racing cars is advantageously used, since these provide a connection with substantially reduced gap in comparison to ball joints normally used for standard vehicles.

The physical king pin axis 124 is formed by a solid cylindrical structure, having an opening 134 at each end thereof. This structure enables measurement probes, e.g. laser probe heads or coordinate measurement machine, CMM, probes (not shown), or markers, to be positioned at each end of the physical king pin axis 124 in order to perform measurements on the physical king pin axis. Preferably, the openings 134 are threaded, therey allowing CMM markers to be positioned with respect to the physical king pin axis 124 with high accuracy during CMM measurements.

The probes enable measurement of the orientation of the physical king pin axis 124. In particular, the probes enables calculating projections of the physical king pin axis 124 in two planes of a cartesian coordinate system, the cartesian coordinate system having one of its axes along the vertical direction and another of its axes along the horizontal direction. From these projections, the king pin angle α and the caster angle β can be determined. The hence determined king pin angle and caster angle provide calibration reference values for these parameters.

The wheel mounting arrangement 114, although showing similarities with a wheel suspension of a vehicle, is thus of simplified mechanical construction and does not provide for movement of the wheel in the vertical direction.

By the wheel mounting arrangement 114, including the physical king pin axis represented by the tubular element 124, a well defined king pin angle and caster angle is realized, enabling calibration of king pin angle and caster angle measurements in a wheel alignment station.

The steering arrangement 108 and its connection to the wheel mounting arrangement 114 is schematically illustrated in Fig. 7. The steering arrangement 108 comprises the steering wheel 110, connected to the steering column 136. The steering column 136 is in turn connected to the linkage 132, including steering gear 133 and outer tie rod 130, in a known manner such that the front wheels 1042 can be turned by turning the steering wheel 110. The steering arrangement 108 further comprises a steering motor 138, operatively connected to the steering column 136 such as to perform and control steering of the front wheels 1042. In Fig. 7, the steering motor 138 is illustrated as being coupled to the steering column 136 via a belt drive 139. However, it should be understood that alternatively other coupling mechanisms could be possible. Furthermore, in Fig. 7 only the connection to the front left wheel is shown. The connection to the front right wheel is corresponding. Also, in Fig. 7, for ease and clarity of illustration, the frame 106 has been left out, such as to merely show the steering arrangement and its connection to the front left steering wheel.

**As** described at the onset of the present disclosure, the rolling master fixture 100 has been developed for calibration of king pin angle and caster angle values measured by wheel alignment stations, such as the wheel alignment station 10 illustrated in Fig. 1. To this end, the rolling master fixture 100 of the present disclosure is positioned in the wheel alignment station 10. Laser light is projected onto the wheels 1041, 1042 and the screens 6 and measurements are performed by the wheel alignment station 10. Wheel alignment parameters, including king pin angle α, and caster angle β, and typically also toe angle and camber angle, are measured by performing measurements on the rolling master fixture 100. Toe angle and camber angle are defined as known by the skilled person.

Toe and camber angles are measured with the wheels in the straight-ahead position, in a manner as known to the person skilled in the art. The front wheels 1042 and the rollers 12, are turned, wherein the front wheels 1042 are turned around the king pin axis, as enabled by the present disclosure and described herein above. Typically, they may be turned about ±10° with respect to the king pin axis, although other amounts of turning might also be possible. During the turning of the front wheels, the toe angle and camber angles are measured by the wheel alignment station. From the toe and camber angles as measuring while turning the wheels, the king pin angle, KPI, and caster angle are calculated. Hence, the rolling master fixture according to the present disclosure enables measurement of not only toe and camber angles using a wheel alignment station, but also of king pin angle, KPI, and caster angle, similar to measurements performed on a real vehicle.

In addition to the measurements performed using the wheel alignment station, measurements, such as CMM measurements, are performed using probes connected to the physical king pin axis, as was described herein above with reference to Fig. 5. From the measurements on the physical king pin axis, reference values of the king pin angle and the caster angle are obtained, which are used for the calibration of the measurement values obtained from the wheel alignment station of the king pin angle and caster angle.

From the measurement results obtained using the wheel alignment station, various wheel alignment parameters are determined by the wheel alignment station. From comparison of the parameter values obtained in the wheel alignment station measurements with expected parameter values, which are determined by the probe measurements, such as CMM measurements, described herein above, the measurement values of the wheel alignment station can be calibrated.

The values of the king pin angle α and the caster angle β as determined by the wheel alignment station are compared to the predefined values of the king pin angle α and caster angle β and the measurements obtained by the CMM measurements of the physical king pin axis.

In summary, the rolling master fixture of the present disclosure enables calibration of measurements of not only toe angle and camber angle, but also king pin angle and caster angle. Various modifications to the embodiments described herein above are possible, as can be understood by a person skilled in the art.

## Claims

1. A rolling master fixture (100) for calibration of a wheel alignment station and/or measurement devices thereof, the rolling master fixture comprising:
- a support frame (102);
- two rear wheels (1041) mounted to the support frame;
- two front wheels (1042) mounted to the support frame through a front wheel mounting arrangement (114); and
- a steering arrangement (108) for steering the front wheels.

2. Rolling master fixture according to any one of the preceding claims, wherein the front wheel mounting arrangement comprises a physical king pin axis (124).

3. Rolling master fixture according to claim 2, wherein the physical king pin axis is provided with an opening (134) at each end.

4. Rolling master fixture according to any one of claims 2 and 3, wherein the front wheel mounting arrangement is configured for positioning a measurement probe at each end of the physical king pin axis for measuring one or more parameters related to the inclination of the physical king pin axis.

5. Rolling master fixture according to any one of claims 2-4, wherein the front wheel mounting arrangement (114) comprises a wheel mounting frame (122), the physical king pin axis being arranged at least partly in the wheel mounting frame, the wheel mounting frame being connected to the steering arrangement.

6. Rolling master fixture according to claim 5, wherein the wheel mounting frame is further provided with a bearing (128) for rotatably mounting the front wheel.

7. Rolling master fixture according to any one of the preceding claims, wherein the steering arrangement comprises a steering column (136) and a motor (138) connected to the steering column for controlling steering of the front wheels.

8. Rolling master fixture according to any one of the preceding claims, wherein the support frame is at least partly made of aluminum or of a material comprising aluminum.

9. Rolling master fixture according to any one of the preceding claims, comprising a control panel (140) for controlling operation of the rolling master fixture and/or one or more components thereof, the control panel being in wired (142) or wireless communication with the rolling master fixture and/or the one or more components thereof.

10. Method for calibrating a wheel alignment station (10) and/or measurement devices thereof, the method comprising:
- arranging a rolling master fixture (100) according to any one of the preceding claims in the wheel alignment station;
- determining wheel alignment parameters from measurements using the wheel alignment station, the wheel alignment parameters including king pin angle (α) and caster angle (β);
- calibrating the wheel alignment station and/or the measurement devices thereof based on a comparison of the caster angle and king pin angle as determined from the measurements, using the wheel alignment station with calibration values of caster angle and king pin angle determined through probe measurements on the physical king pin axis.

11. Method according to claim 10, wherein the probe measurements on the physical king pin axis include laser probe measurements, preferably coordinate measurement machine, CMM, measurements.
